# EUROPÄISCHE PATENTSCHRIFT

(11) **EP 1 470 870 B1**
(45) Veröffentlichungstag und Bekanntmachung des Hinweises auf die Patenterteilung: **09.08.2006**
(21) Anmeldenummer: 04009510.1
(22) Anmeldetag: 22.04.2004
(51) Int. Cl.: B08B 9/055, F16L 55/46

(54) **Einrichtung zum Reinigen einer Hauptrohrleitung mittels eines Molches**
Installation for cleaning a main pipeline by means of a pig
Installation pour nettoyer une conduite principale au moyen d'un racleur

(30) Priorität: 26.04.2003 DE 10318902
(43) Veröffentlichungstag der Anmeldung: 27.10.2004
(73) Patentinhaber: PFEIFFER CHEMIE-ARMATURENBAU GmbH, 47906 Kempen (DE)
(72) Erfinder: Druyen, Stephan, 47669 Wachtendonk (DE)
(74) Vertreter: Sroka, Peter-Christian

(56) Entgegenhaltungen:
- US-A- 3 817 268
- US-A- 5 842 816
- PATENT ABSTRACTS OF JAPAN Bd. 018, Nr. 001 (C-1148), 6. Januar 1994 (1994-01-06) & JP 05 245458 A (FUJI OIL CO LTD), 24. September 1993 (1993-09-24)

## Beschreibung

Die Erfindung betrifft eine Einrichtung gemäß dem Oberbegriff des Patentanspruchs 1.

Bei einer in der DE 42 37 089 A1 beschriebenen Einrichtung dieser Art wird als Molch ein Bürstenreinigungskörper verwendet, der an seiner Vorderseite eine schildartige Kappe, die beispielsweise aus hartem Kunststoff oder aus Metall gefertigt ist, sowie einen daran anschließenden Bürstenkörper aufweist. Mit der bekannten Einrichtung ist es zur Durchführung von mehreren aufeinanderfolgenden Reinigungszyklen möglich, den Bürstenreinigungskörper fortwährend im Leitungssystem ohne Richtungsumkehr zu belassen, d. h., es ist nicht erforderlich, den Bürstenreinigungskörper nach jedem Reinigungszyklus an einer Stelle in das Rohrleitungssystem einzuführen und an einer anderen Stelle zu entnehmen. Derartige Bürstenkörper können durch ventilartige Absperrorgane hindurchgefördert werden, und sind damit nur für ganz spezielle Anwendungsgebiete geeignet. Diese bekannte Einrichtung ist nicht für als sogenannte Passkörper ausgebildete Molche geeignet, die Durchmesser von 25 mm - 250 mm oder mehr haben können und damit nicht in der Lage sind, wie als Bürstenreinigungskörper ausgebildeten Molche ventilartige Absperrvorrichtungen zu passieren. Aus dieser Druckschrift ist nicht ersichtlich, wie der Bürstenreinigungskörper in einfacher Weise in das Rohrleitungssystem eingebracht werden kann.

Es ist grundsätzlich bekannt, zum Reinigen von Rohrleitungen Molche in Form von Passkörpem zu verwenden, die mittels Druckluft oder Stickstoff oder mittels des durch die Rohrleitung strömenden Produktes durch die Rohrleitung hindurch bewegt werden. Dabei wird bei bekannten z.B. aus Dokument US-A-3817268, sogenannten offenen Molchsystemen der Molch am Produkteingang der zu reinigenden Rohrleitung in die Rohrleitung eingeschleust und am Produktausgang der zu reinigenden Rohrleitung aus der Rohrleitung ausgeschleust. Die ausgeschleusten Molche müssen dann in irgendeiner Weise zum Produkteingang zurücktransportiert werden, was einen erheblichen Aufwand darstellt, insbesondere dann, wenn die Reinigung der Rohrleitung durch Molchen in relativ kurzen Zeitabständen durchgeführt werden soll. Das Ausschleusen und Wiedereinschleusen der Molche bringt einen erheblichen Zeitbedarf mit sich und kann auch zur Kontamination der Molche führen. Weiterhin sind kurze Molchzyklen gleichbedeutend mit einem "Molchspeichern" auf beiden Seiten der Anlage.

Es sind weiterhin sogenannte geschlossene Molchsysteme bekannt, bei denen der Molch zunächst in der zu reinigenden Rohrleitung vom Produkteingang zum Produktausgang fährt und dann durch die leere Rohrleitung entgegen dem eigentlichen Produktstrom in seine Startposition zurückgefördert wird. Hierbei wird meist gasförmiges Treibmittel wie Druckluft oder Stickstoff verwendet, aber auch der Einsatz von Flüssigkeiten ist möglich.

Bei den geschlossenen Molchsystemen ist ein permanenter Durchfluß des Produkts aufgrund der Leerfahrt des Molches zurück in die Startposition nicht möglich.

Eine Reinigung der Rohrleitung durch Molchen in kurzen Zeitabständen ist erwünscht, wenn durch die Rohrleitung ein fließfähiges Produkt geleitet wird, bei dem sich relativ rasch Ablagerungen in der Rohrleitung bilden können, die das Rohr schließlich zusetzen. Wegen der oben erwähnten Schwierigkeiten bei Molchsystemen werden deshalb bisher in diesen Fällen andere Reinigungsvorrichtungen eingesetzt, wie beispielsweise in die Rohrleitung integrierte Bürsten oder Schraubenspindeln, die aber sehr aufwendige feste Installationen an der Rohrleitung darstellen.

Der Erfindung liegt die Aufgabe zugrunde, eine Vorrichtung zur Reinigung einer ein fließfähiges Produkt führenden Rohrleitung mittels eines Molches so zu gestalten, dass Molche verschiedenster Ausfürungsformen, insbesondere auch Molche in Form von Passkörpern mit Durchmessern von 25 mm - 250 mm oder mehr zum Reinigen der Rohrleitung benutzt werden können, wobei eine quasi permanente Reinigung möglich sein soll, ohne dass durch die Rückführung der Molche ein größerer Aufwand besteht und ohne dass der Produktstrom unterbrochen werden muss.

Diese Aufgabe wird mit einer Einrichtung gemäß dem Kennzeichen des Patentanspruchs 1 gelöst.

Der Kerngedanke der Erfindung besteht darin, der zu reinigenden Hauptrohrleitung eine Bypass-Leitung zuzuordnen, die eine Molcheinschleusungseinrichtung enthält, die in der Lage ist, den Molch nach jedem Reinigungszyklus der Hauptrohrleitung von dem Auslaßende der Hauptförderleitung wieder zur Einlaßseite der Hauptförderleitung zu verlagern. Bei der Überführung kann der Molch entweder für einen vorgegebenen Zeitraum in dieser Molcheinschleusungseinrichtung festgehalten werden, oder er kann zugleich zum nächsten Durchgang durch die zu reinigende Hauptrohrleitung freigegeben werden. Auf diese Weise ist es möglich, zwischen Molchen verschiedenster Ausführungsformen eine Rohrleitung in beliebig kurzen Zeitabständen zu reinigen, wobei selbstverständlich auch jeweils mehrere Molche hintereinander durch die Rohrleitung hindurch bewegt werden können, die jeweils in der oben erläuterten Weise von dem Bereich in der Nähe des Produktausganges wieder in den Bereich in der Nähe des Produkteingangs zurückgeführt werden.

Im folgenden werden anhand der beigefügten Zeichnungen zwei Ausführungsbeispiele einer Einrichtung zum Reinigen einer ein fließfähiges Produkt führenden Rohrleitung beschrieben.

In den Zeichnungen zeigen:
Figur 1 in einem prinzipiellen Schaltbild eine durch einen Wärmetauscher geführte Hauptrohrleitung mit einer Überführungseinrichtung für einen Molch;
Figur 2 in einer konkretisierten Teildarstellung die Rohrleitung nach Figur 1 im Bereich der Überfiihrungseinrichtung für den Molch.
Figur 3 in einem prinzipiellen Schaltbild eine von einem Lagerbehälter zu einer Abfiillstation geführte Hauptrohrleitung mit einer Rückführungsleitung für einen Molch.

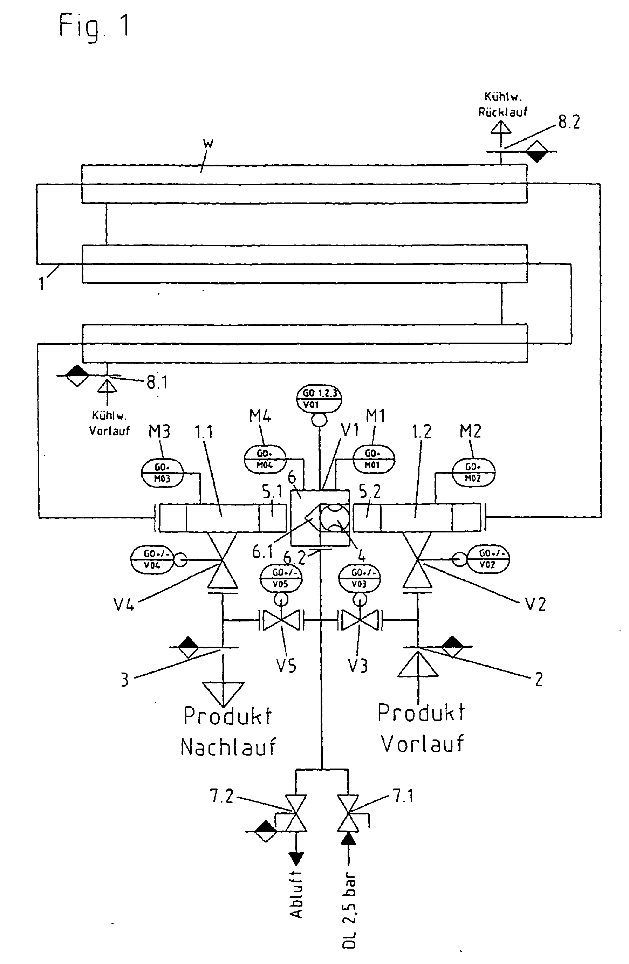

Figur 1 zeigt eine Hauptrohrleitung 1.2-1-1.1, deren Mittelabschnitt 1 durch einen Wärmetauscher W mit einem Kühlwasservorlauf 8.1 und einem Kühlwasserrücklauf 8.2 geführt ist. In den Eingangsabschnitt 1.2 der Hauptrohrleitung mündet unter Zwischenschaltung einer Absperrvorrichtung V2 ein Produkteingangs-Leitungszweig 2; an den Ausgangsabschnitt 1.1 der Hauptrohrleitung schließt unter Zwischenschaltung einer Absperrvorrichtung V4 ein Produktausgangs-Leitungszweig 3 an. Zwischen den Eingangs- und Ausgangsabschnitten 1.1 bzw. 1.2 der Hauptrohrleitung liegt eine Bypass-Leitung 5.1; 5.2, die zur Überführung eines Molchs 4 aus dem Ausgangsabschnitt 1.1 in den Eingangsabschnitt 1.2 der Hauptrohrleitung eine als Molcheinschleusungskugelhahn V1 ausgebildete Einrichtung enthält, von der aus Vereinfachungsgründen nur die Kugel 6 schematisiert dargestellt ist.

Als Kugelhahn ausgebildete Einrichtungen zum Ein- und Ausschleusen eines Molchs in eine molchbare Leitung sind an sich bekannt und beispielsweise in DE 93 03 722 U beschrieben.

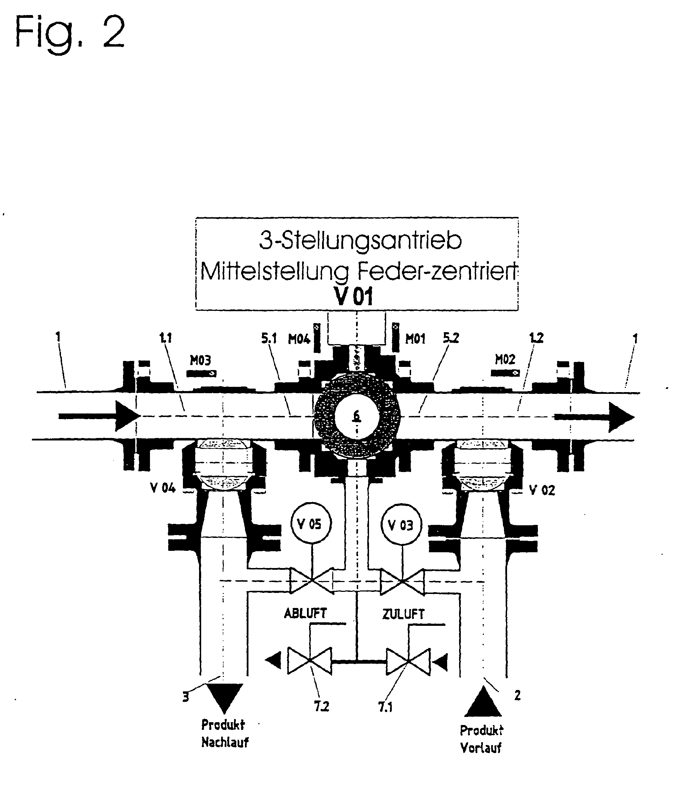

Die Kugel 6 des Kugelhahns V1 hat eine Sacklochbohrung 6.1 zur Aufnahme des Molchs 4. Sie kann aus einer Moch-Aufnahmestellung, in der die Öffnung der Sacklochbohrung 6.1 zum Ausgangsabschnitt 1.1. der Hauptrohrleitung und damit zum Aufnahmeteil 5.1 der Bypass-Leitung gerichtet ist, in die in Figur 1 dargestellte Molch-Abgabestellung gedreht werden, in der die Öffnung der Sacklochbohrung 6.1 dem Eingangsabschnitt 1.2 der Hauptrohrleitung und damit auch dem Abgabeteil 5.2 der Bypass-Leitung zugewandt ist. Wie die Figuren 1 und 2 zeigen, ist die Sacklochbohrung 6.1 über einen Ein-/Ausgang 6.2 und eine erste Absperrvorrichtung V5 mit dem Produktausgangs-Leitungszweig 3 und über eine Absperrvorrichtung V3 mit dem Produkteingangs-Leitungszweig 2 verbunden. Im Bereich der Eingangs- und Ausgangsabschnitte 1.2 bzw. 1.1 der Hauptrohrleitung sind Sensoren M3 bzw. M2 zur Erfassung der Anwesenheit oder des Durchgangs eines Molchs angeordnet, und am Molcheinschleusungskugelhahn V1 sind weitere Sensoren M1und M4 angeordnet, welche auf die Stellung der Kugel 6 und die Anwesenheit eines Molchs ansprechen.

Zum Einsetzen und Herausnehmen eines Molchs in die Kugel 6 des Molcheinschleusungskugelhahns V1 ist die Kugel 6 in nicht dargestellter Weise zwischen einer Einsetz- und einer Entnahmestellung drehbar, in der nach Lösen eines nicht dargestellten Deckels die Sacklochbohrung 6.1 nach außen hin offen ist. Zur Unterstützung dieser Vorgänge ist der Ein-/Ausgang 6.2 über ein Absperrorgan 7.1 an eine Druckluftquelle und über ein Absperrorgan 7.2 an eine Abluftleitung anschließbar.

Die Funktionsweise der in Figur 1 beschriebenen Einrichtung ist wie folgt:

Zur Betätigung der Absperrvorrichtungen V1 - V5 dient eine nicht dargestellte und in ihrer Funktionsweise prinzipiell bekannte Steuereinrichtung, der auch die Signale der Sensoren M1 - M4 zugeführt werden. Die Betätigung der Absperrvorrichtungen kann beispielsweise pneumatisch erfolgen. Vor der Inbetriebnahme sind die Absperrvorrichtungen V2, V3, V4 und V5 geschlossen. Der Molcheinschleusungskugelhahn V1, in dem ein Molch 4 enthalten ist, was durch die Sensoren M1 und M4 angezeigt wird, kann sich in einer Mittelstellung befinden. Zur Inbetriebnahme werden die Absperrvorrichtungen V2 und V4 geöffnet, so dass das zu fördernde Produkt durch den Produkteingangs-Leitungszweig 2 den Eingangsabschnitt 1.2 und die durch den Wärmetauscher W geführte Rohrleitung 1 zum Ausgangsabschnitt 1.1 und dann in den Produktausgangs-Leitungszweig 3 strömt. Wenn der Molch 4 zu Reinigungszwecken in den Eingangsabschnitt 1.2 der Hauptrohrleitung eingeschleust werden soll, wird die Kugel 6 des Molcheinschleusungskugelhahns V1 in die in Figur 1 dargestellte Stellung gedreht, in der die Sacklochbohrung 6.1 zum Abgabeteil 5.2 der Bypass-Leitung und somit zum Eingangsabschnitt 1.2 der Hauptrohrleitung offen ist. Diese Stellung wird durch den Sensor M1 angezeigt. Danach wird die Absperrvorrichtung V3 geöffnet, und die Absperrvorrichtung V2 wird geschlossen, so dass das Produkt über den Ein-/Ausgang 6.2 in die Sacklochbohrung 6.1 einströmt und der Molch 4 in den Eingangsabschnitt 1.2 eingeschleust wird, was durch den Sensor M2 angezeigt wird. Danach wird die Absperrvorrichtung V2 geöffnet, um den Molch 4 durch die Hauptrohrleitung zu fördern. Die Absperrvorrichtung V3 wird geschlossen. Der Molcheinschleusungskugelhahn V1 wird in die Molchaufnahmestellung gedreht, in der die Kugel 6 so ausgerichtet ist, dass die Sacklochbohrung 6.1 zum Aufnahmeteil 5.1 der Bypass-Leitung und damit zum Ausgangsabschnitt 1.1 der Hauptrohrleitung offen ist. Die Absperrvorrichtung V5 wird geöffnet, und, wenn der Sensor M3 anzeigt, dass der Molch im Ausgangsabschnitt 1.1 angekommen ist, wird die Absperrvorrichtung V4 geschlossen, so dass der Molch in die Sacklochbohrung 6.1 eingeschoben wird. In der Sacklochbohrung 6.1 befindliches Produkt kann über die geöffnete Absperrvorrichtung V5 in den Produktausgangs-Leitungszweig 3 abfließen. Wenn der Sensor M4 anzeigt, dass der Molch 4 vollständig in die Sacklochbohrung eingetreten ist, wird die Absperrvorrichtung V5 wieder geschlossen und die Absperrvorrichtung V4 wird geöffnet. Der Molcheinschleusungskugelhahn V1 kann dann wieder in die Mittelstellung bewegt werden, und es kann jederzeit ein neuer Zyklus eines Molchdurchgangs durch die Hauptrohrleitung eingeleitet werden.

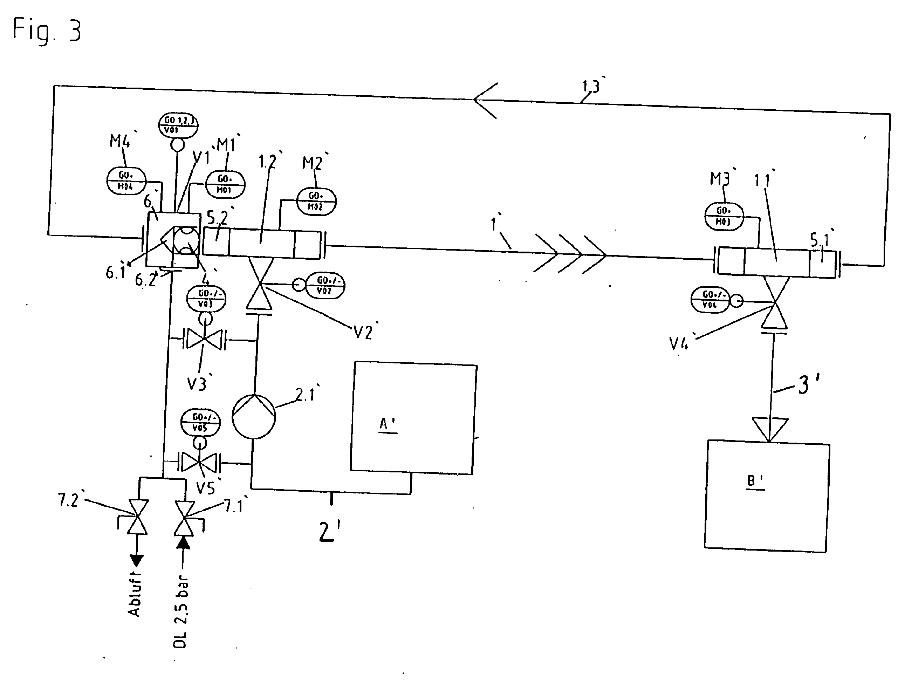

Figur 3 zeigt ein Beispiel einer Rohrleitung, die von einem Lagerbehälter A' zu einer Abfiillstation B' führt. In Figur 3 sind die der Ausführungsform nach den Figuren 1 und 2 entsprechenden Teile der Einrichtung mit den gleichen Bezugsziffern bezeichnet, die mit einem Apostroph-Strich versehen sind. Der Lagerbehälter A ist über den Produkteingangs-Leitungszweig 2', die Hauptförderleitung 1.2'-1'-1.1' und den Produktausgangs-Leitungszweig 3' an die Abfüllstation B angeschlossen. Das Leitungssystem kann auch einem Reaktor, einer Conti-Prozesseinheit oder dergleichen zugeordnet sein.

Das Produkt wird mittels einer Pumpe 2.1' durch die Absperrvorrichtung V2' dem Eingangsabschnitt 1.2' zugeführt und nach Durchlaufen des Rohrleitungsabschnitts 1' und des Ausgangsabschnitts 1.1' über ein Absperrorgan V4' und den Produktausgangs-Leitungszweig 3' in die Abfüllstation B gefördert. Zwischen den Eingangs- und Ausgangsabschnitten 1.2' bzw. 1.1' liegt eine Bypass-Leitung 5.2'- 1.3'-5.1', in der zum Einschleusen eines Molchs 4' in die Hauptrohrleitung 1.2'-1' -1.1' eine als Molcheinschleusungskugelhahn V1' ausgebildete Einrichtung liegt, von der aus Vereinfachungsgründen nur die Kugel 6' schematisiert dargestellt ist. Die Kugel 6' des Kugelhahns V1' ist mit einer Sacklochbohrung 6.1' für den Molch 4' versehen. Die Kugel 6' kann aus einer Molchaufnahmestellung, in der die Öffnung der Sacklochbohrung 6.1' dem Mittelabschnitt 1.3' der Bypass-Leitung und damit dem Ausgangsabschnitt 1.1' der Hauptrohrleitung zugewandt ist, in die in Figur 3 dargestellte Molchabgabestellung gedreht werden, in der die Öffnung der Sacklochbohrung 6.1' dem Eingangsabschnitt 1.2' der Hauptrohrleitung zugewandt ist. Wie in Figur 3 dargestellt, ist die Sacklochbohrung 6.1' über einen Ein-/Ausgang 6.2' und eine Absperrvorrichtung V5' an den Eingang der Pumpe 2.1' und über eine Absperrvorrichtung V3' an den Ausgang der Pumpe 2.1' angeschlossen.

Wie bei der Ausführungsform nach den Figuren 1 und 2 sind auch bei der Ausführungsform gemäß Figur 3 Sensoren zur Erfassung der Anwesenheit oder des Durchgangs eines Molchs angeordnet, und zwar am Eingangsabschnitt 1.2' ein Sensor M2', und am Ausgangsabschnitt 1.1' ein Sensor M3' und am Molcheinschleusungskugelhahn V1' die Sensoren M1' und M4'.

Die Funktionsweise der Einrichtung nach Figur 3 ist wie folgt:
Zur Betätigung der Absperrvorrichtungen V1' - V5' kann wiederum eine nicht dargestellte Steuereinrichtung dienen, der auch die Signale der Sensoren M1' - M4' zugeführt werden.

Vor der Inbetriebnahme sind die Absperrvorrichtung V2', V3', V4' und V5' geschlossen. Der Molcheinschleusungskugelhahn V1' befindet sich in der in Figur 3 dargestellten Molchabgabestellung. Zur Inbetriebnahme werden die Absperrorgane V2 und V4 geöffnet, und die Pumpe 2.1' wird eingeschaltet, so dass das Produkt aus dem Lagerbehälter A' in die Abfüllstation B' gefördert wird. Wenn der Molch 4' in den Eingangsabschnitt 1.2' der Hauptrohrleitung eingeschleust werden soll, muss der Molcheinschleusungskugelhahn V1 in der Stellung stehen, in der die Öffnung der Sacklochbohrung 6.1' zum Abgabeteil 5.2' der Bypass-Leitung hin offen ist. Die Absperrvorrichtung V3' wird geöffnet, und die Absperrvorrichtung V2' wird geschlossen. Von dem Sensor M2' wird bestätigt, wenn der Molch durch den Abgabeteil 5.2' in den Eingangsabschnitt 1.2' und den Mittelabschnitt 1' der Hauptrohrleitung eingeschleust ist. Danach wird die Absperrvorrichtung V3' wieder geschlossen, und die Absperrvorrichtung V2' wird geöffnet. Der Molcheinschleusungskugelhahn V1' wird wieder in seine Molchaufnahmestellung gedreht, in der die Öffnung der Sacklochbohrung 6.1' dem Leitungsabschnitt 1.3' der Bypass-Leitung und damit dem Ausgangs-Leitungsabschnitt 1.1' der Hauptrohrleitung zugewandt ist. Der Sensor M3' bestätigt den Durchgang des Molchs durch die Hauptrohrleitung. Danach wird die Absperrvorrichtung V5' geöffnet, so dass in den Leitungsabschnitten 5.1' und 1.3' der Bypass-Leitung und in der Sacklochbohrung 6.1' befindliches Produkt zum Eingang der Pumpe 2.1 ' abfließen und der Molch 4' in die Sacklochbohrung 6.1' eintreten kann, was durch den Sensor M4' bestätigt wird. Danach wird das Absperrorgan V5' wieder geschlossen, und der Molcheinschleusungskugelhahn V1' wird in die in Figur 3 dargestellte Molchabgabestellung gedreht, so dass ein neuer Zyklus durchgeführt werden kann.

Während der Molch durch den Leitungsabschnitt 1.3' zurückgeführt wird, kann es u. U. notwendig sein, den Hauptstrom zur Abfüllstation B mittels des Absperrorgans V4' zu drosseln.

Auch bei der Ausführungsform gemäß Figur 3 ist die Kugel 6' des Molcheinschleusungskugelhahns V1' in eine Einsatz-/Entnahmestellung drehbar, in der die Sacklochbohrung 6.1' von außen zugänglich ist, so dass ein Molch eingesetzt oder entnommen werden kann. Der Ein-/Ausgang 6.2' ist über ein Absperrorgan 7.1' an eine Druckluftquelle und über ein Absperrorgan 7.2' an einer Abluftleitung angeschlossen.

## Patentansprüche

1. Einrichtung zum Reinigen einer Hauptrohrleitung mittels eines Molches, der von dem durch die Hauptrohrleitung geförderten Produkt durch diese Hauptrohrteitung (1.2-1-1.3 bzw. 1.2'-1'-1.1') getrieben wird, wobei an einen Eingangsabschnitt (1.2 bzw. 1.2') der Hauptrohrleitung ein Produkteingangs-Leitungszweig (2 bzw. 2') und an den Ausgangsabschnitt (1.1 bzw. 1.1') der Hauptrohrleitung ein Produktausgangs-Leitungszweig (3 bzw. 3') anschließen, und wobei zwischen dem Eingangs- und dem Ausgangsabschnitt der Hauptrohrleitung eine Bypass-Leitung liegt, um den Molch ventilgesteuert von dem Ausgangsabschnitt zum Eingangsabschnitt der Hauptrohrleitung zu fördern, **dadurch gekennzeichnet, dass** in der Bypass-Leitung (5.1-5.2 bzw. 5.2'-1.3'-5.1') ein Molcheinschleusungskugelhahn (V1 bzw. V1') angeordnet ist, dessen Kugel (6; 6') eine Sacklochbohrung (6.1 bzw. 6.1') zur Aufnahme des Molches (4 bzw. 4') aufweist und der zwischen einer Molchaufnahmestellung, in der die Öffnung der Sacklochbohrung (6.1; 6.1') zum Ausgangsabschnitt (1.1 bzw. 1.1') der Hauptrohrleitung gerichtet ist, und einer Molchabgabestellung drehbar ist, in der die Öffnung der Sacklochbohrung zum Eingangsabschnitt (1.2 bzw. 1.2') der Hauptrohrleitung gerichtet ist.

2. Einrichtung nach Anspruch 1, **dadurch gekennzeichnet, dass** die Sacklochbohrung (6.1) der Kugel (6) des Molcheinschleusungskugelhahns (V1) über eine Absperrvorrichtung (V5) an den Produktausgangs-Leitungszweig (3) und über eine Absperrvorrichtung (V3) an den Produkteingangs-Leitungszweig (2) anschließbar ist.

3. Einrichtung nach Anspruch 2, **dadurch gekennzeichnet, dass** zwischen dem Produktausgangs-Leitungszweig (3) und dem Ausgang (1.1) der Hauptrohrleitung eine Absperrvorrichtung (V4) und zwischen dem Produkteingangs-Leitungszweig (2) und dem Eingang (1.2) der Hauptrohrleitung eine Absperrvorrichtung (V2) angeordnet sind.

4. Einrichtung nach einem der Ansprüche 1 - 3, **dadurch gekennzeichnet, dass** im Bereich des Ausgangsabschnitt (1.1) der Hauptrohrleitung oder eines Aufnahmeteils (5.1) der Bypass-Leitung und im Bereich des Eingangsabschnitts (1.2) der Hauptrohrleitung oder des Abgabeteils (5.2) der Bypass-Leitung Sensoren (M3, M2) zur Erfassung der Anwesenheit und/oder des Durchgangs eines Molchs (4) angeordnet sind.

5. Einrichtung nach Anspruch 2, **dadurch gekennzeichnet, dass** in den Produkteingangs-Leitungszweig (2') eine Förderpumpe (2.1') eingeschaltet ist.

6. Einrichtung nach Anspruch 5, **dadurch gekennzeichnet, dass** die Sacklochbohrung (6.1') der Kugel (6) des Molcheinschleusungskugelhahns (V') über eine Absperrvorrichtung (V5') mit dem Eingang der Förderpumpe (2.1') und über eine Absperrvorrichtung (V3') mit dem Ausgang der Förderpumpe (2.1) verbindbar ist.

7. Einrichtung nach Anspruch 6, **dadurch gekennzeichnet, dass** der Ausgang (1.1') der Hauptrohrleitung über eine dritte Absperrvorrichtung (V4') an den Produktausgangs-Leitungszweig (3') angeschlossen ist und der Eingang (1.2') der Hauptrohrleitung über eine vierte Absperrvorrichtung (V2') an den Ausgang der Förderpumpe (2.1') angeschlossen ist.

8. Einrichtung nach einem der Ansprüche 5 - 7, **dadurch gekennzeichnet, dass** im Bereich des Ausgangsabschnitts (1.1') der Hauptrohrleitung oder des Aufnahmeteils (5.1') der Bypass-Leitung und im Bereich des Eingangsabschnitts (1.2') der Hauptrohrleitung oder des Abgabeteils (5.2') der Bypass-Leitung Sensoren (M3', M2') zur Erfassung der Anwesenheit und/oder des Durchgangs eines Molches angeordnet sind.

9. Einrichtung nach Anspruch 2, **dadurch gekennzeichnet, dass** am Molcheinschleusungskugelhahn (V1; V1') Sensoren (M4, M1; M4', M1') zur Erfassung der Stellung der Kugel und/oder Anwesenheit eines Molchs angeordnet sind.

10. Einrichtung nach Anspruch 1, **dadurch gekennzeichnet, dass** die Kugel des Molcheinschleusungskugelhahns (V1) zum Einsetzen oder Entnehmen eines Molchs in die Sacklochbohrung (6.1; 6.1') zwischen einer Einsetz- und Entnahmestellung drehbar ist.

## Claims

1. Device for cleaning a main pipeline by means of a pig which is driven by the product conveyed through the main pipeline through this main pipeline (1.2-1-1.3 and 1.2'-1'1.1'), wherein a product inlet branch (2 or 2') adjoins an input section (1.2 or 1.2') of the main pipeline and a product outlet branch (3 or 3') adjoins the outlet section (1.1 or 1.1') of the main pipeline, and wherein between the inlet and the outlet sections there is a bypass line to convey the pig, in a valve-controlled manner, from the outlet section to the inlet section of the main pipeline, **characterised in that** a pig transfer ball valve (V1 or V1') is arranged in the bypass line (5.1-5.2 or 5.2'-1.3'-5.1'), of which valve the ball (6; 6') has a blind hole (6.1 or 6.1') for receiving the pig ( 4 or 4') and can be rotated between a pig-receiving position in which the opening of the blind hole (6.1 or 6.1') is directed toward the outlet section (1.1or 1'1') of the main pipeline, and a pig-discharging position in which the opening of the blind hole is directed toward the inlet section (1.2 or 1.2') main pipeline.

2. Device according to claim 1, **characterised in that** the blind hole (6.1) of the ball (6) of the pig transfer ball valve (V1) can be connected by a shut-off device (V5) to the product outlet branch (3) and by a shut-off device (V3) to the product inlet branch (2).

3. Device according to claim 2, **characterised in that** between the product outlet branch (3) and the outlet (1.1) of the main pipeline there is arranged a shut-off device (V4), and between the product inlet branch (2) and the inlet (1.2) of the main pipeline there is arranged a shut-off device (V2).

4. Device according to any one of claims 1 to 3, **characterised in that** there are arranged in the region of the outlet section (1.1) of the main pipeline, or a receiving part (5.1) of the bypass line, and in the region of the inlet section (1.2) of the main pipeline, or the discharge part (5.2) of the bypass line, sensors (M3, M2) for detecting the presence and/or passage of a pig (4).

5. Device according to claim 2, **characterised in that** a feed pump (2.1') is connected into the production inlet branch (2').

6. Device according to claim 5, **characterised in that** the blind hole (6.1') of the ball (6) of the pig transfer ball valve (V1') can be connected by a shut-off device (V5') to the inlet of the feed pump (2.1'), and by a shut-off device (V3') to the outlet of the feed pump (2.1).

7. Device according to claim 6, **characterised in that** the outlet (1.1') of the main pipeline is connected by a third shut-off device (V4') to the product outlet branch (3') and the inlet (1.2') of the main pipeline is connected by a fourth shut-off device (V2') to the outlet of the feed pump (2.1').

8. Device according to any one of claims 5 to 7, **characterised in that** there are arranged in the region of the outlet section (1.1.') of the main pipeline, or the receiving part (5.1') of the bypass line, and in the region of the inlet section (1.2') of the main pipeline, or the discharge part (5.2') of the bypass line, sensors (M3', M2') for detecting the presence and/or passage of a pig.

9. Device according to claim 2, **characterised in that** there are arranged at the pig transfer ball valve (V1' V1') sensors (M4, M1; M4', M1') for detecting the position of the ball and/or the presence of a pig.

10. Device according to claim 1, **characterised in that** the ball of the pig transfer ball valve (V1) can be rotated between an insertion or removal position to insert or remove a pig into/from the blind hole (6.1; 6.1').

## Revendications

1. Dispositif en vue du nettoyage d'un pipeline principal au moyen d'un écouvillon qui est entraîné par le produit transporté à travers le pipeline principal à travers ce pipeline principal (1.2-1-1.3 ou 1.2'-1'-1'.1'), une ramification de conduite d'entrée de produit (2 ou 2') se raccordant à une section d'entrée (1.2 ou 1.2') du pipeline principal et une ramification de conduite de sortie de produit (3 ou 3') se raccordant à la section de sortie (1.1 ou 1.1') du pipeline principal, et une conduite de dérivation se trouvant entre la section d'entrée et de sortie du pipeline principal afin de transporter l'écouvillon de manière contrôlée par des soupapes depuis la section de sortie vers la section d'entrée du pipeline principal, **caractérisé en ce qu'**un robinet à boisseau sphérique d'éclusage d'écouvillon (V1 ou V1') est disposé dans la conduite de dérivation (5.1-5.2 ou 5.2'-1.3'-5.1') dont la sphère (6 ; 6') présente un alésage à trou borgne (6.1 ou 6.1') en vue de la réception de l'écouvillon (4 ou 4') et qui est rotatif entre une position de réception d'écouvillon dans laquelle l'ouverture de l'alésage à trou borgne (6.1 ; 6.1') est orientée vers la section de sortie (1.1 ou 1.1') du pipeline principal, et une section de distribution d'écouvillon dans laquelle l'ouverture de l'alésage à trou borgne est orientée vers la section d'entrée (1.2 ou 1.2') du pipeline principal.

2. Dispositif selon la revendication 1, **caractérisé en ce que** l'alésage à trou borgne (6.1) de la sphère (6) du robinet à boisseau sphérique d'éclusage d'écouvillon (V1) peut être raccordé par l'intermédiaire d'un dispositif de blocage (V5) à la ramification de conduite de sortie de produit (3) et par l'intermédiaire d'un dispositif de blocage (V3) à la ramification de conduite d'entrée de produit (2).

3. Dispositif selon la revendication 2, **caractérisé en ce qu'**un dispositif de blocage (V4) est disposé entre la ramification de conduite de sortie de produit (3) et la sortie (1.1) du pipeline principal et un dispositif de blocage (V2) est disposé entre la ramification de conduite d'entrée de produit (2) et l'entrée (1.2) du pipeline principal.

4. Dispositif selon l'une quelconque des revendications 1 à 3, **caractérisé en ce que** des capteurs (M3, M2) sont disposés en vue de la détection de la présence et/ou du passage d'un écouvillon (4) dans la région de la section de sortie (1.1) du pipeline principal ou d'une partie de réception (5.1) de la conduite de dérivation et dans la région de la section d'entrée (1.2) du pipeline principal ou de la partie de distribution (5.2) de la conduite de dérivation.

5. Dispositif selon la revendication 2, **caractérisé en ce qu'**une pompe de circulation (2.1') est intercalée dans la ramification de conduite d'entrée de produit (2').

6. Dispositif selon la revendication 5, **caractérisé en ce que** l'alésage à trou borgne (6.1') de la sphère (6) du robinet à boisseau sphérique d'éclusage d'écouvillon (V1') peut être relié par l'intermédiaire d'un dispositif de blocage (V5') à l'entrée de la pompe de circulation (2.1') et par l'intermédiaire d'un dispositif de blocage (V3') à la sortie de la pompe de circulation (2.1).

7. Dispositif selon la revendication 6, **caractérisé en ce que** la sortie (1.1') du pipeline principal est raccordée par l'intermédiaire d'un troisième dispositif de blocage (V4') à la ramification de conduite de sortie de produit (3') et l'entrée (1.2') du pipeline principal est raccordée par l'intermédiaire d'un quatrième dispositif de blocage (V2') à la sortie de la pompe de circulation (2.1').

8. Dispositif selon l'une quelconque des revendications 5 à 7, **caractérisé en ce que** des capteurs (M3', M2') sont disposés en vue de la détection de la présence et/ou du passage d'un écouvillon dans la région de la section de sortie (1.1') du pipeline principal ou de la partie de réception (5.1') de la conduite de dérivation et dans la région de la section d'entrée (1.2') du pipeline principal ou de la partie de distribution (5.2') de la conduite de dérivation.

9. Dispositif selon la revendication 2, **caractérisé en ce que** des capteurs (M4, M1 ; M4', M1') sont disposés en vue de la détection de la position de la sphère et/ou de la présence d'un écouvillon sur le robinet à boisseau sphérique d'éclusage d'écouvillon (V1 ; V1').

10. Dispositif selon la revendication 1, **caractérisé en ce que** la sphère du robinet à boisseau sphérique d'éclusage d'écouvillon (V1) est rotative en vue d'insérer ou de prélever un écouvillon dans l'alésage à trou borgne (6.1 ; 6.1') entre une position d'insertion et de prélèvement.
